# DEMANDE DE BREVET EUROPEEN

(11) **EP 1 525 967 A1**
(43) Date de publication de la demande: **27.04.2005**
(21) Numéro de dépôt: 04292443.1
(22) Date de dépôt: 14.10.2004
(51) Int. Cl.: B28B 3/10, B28B 7/38

(54) **Procédé de fabrication d'éléments architectoniques en pisé**

(30) Priorité: 20.10.2003 FR 0312227
(71) Demandeur: Dellagi, Mehdi, 75017 Paris (FR)
(72) Inventeur: Dellagi, Mehdi, 75017 Paris (FR)

(57) **Abrégé**

Procédé de préfabrication d'éléments architectoniques en pisé. L'invention utilise la technique du pisé dans des moules différents que les coffrages habituels de murs porteurs.

Les éléments préfabriqués servent dans le bâtiment comme éléments porteurs ou non porteurs : blocs, panneaux, doublages, décors, mobiliers...

Le procédé permet de produire des éléments architectoniques variés de par leurs structures et leurs usages, dans un matériaux écologique et durable : la terre.

## Description

### - domaine technique de l'invention

Cette invention concerne une adaptation contemporaine et industrielle d'une technique de construction ancienne : le pisé.

### - état de la technique antérieure

Le pisé est la construction d'un mur en terre, compactée dans un espace préconçu. La terre est stabilisée par des liants hydrauliques naturels. Ensuite, elle est compactée par couches successives, en fondations ou dans un mur d'enceinte.

La présente invention, permet d'adapter la technique du pisé quant à la localisation de sa fabrication (préfabrication dans un moule, sur site ou en usine) et aussi, quant à sa destination et/ou sa forme (élément porteur ou de doublage, mobilier...).

### - exposé de l'invention

- conception de l'élément
   La conception doit être faite en fonction de la destination de l'élément : selon sa structure et sa forme.
- mise en oeuvre du pisé
   - matériaux : terre, liants hydrauliques naturels, agrégats et eau.
   - mise en oeuvre du pisé : verser l'agglomérat des matériaux dans le moule, par couches successives. Puis compacter au fur et à mesure.

### - mise en place de l'élément préfabriqué

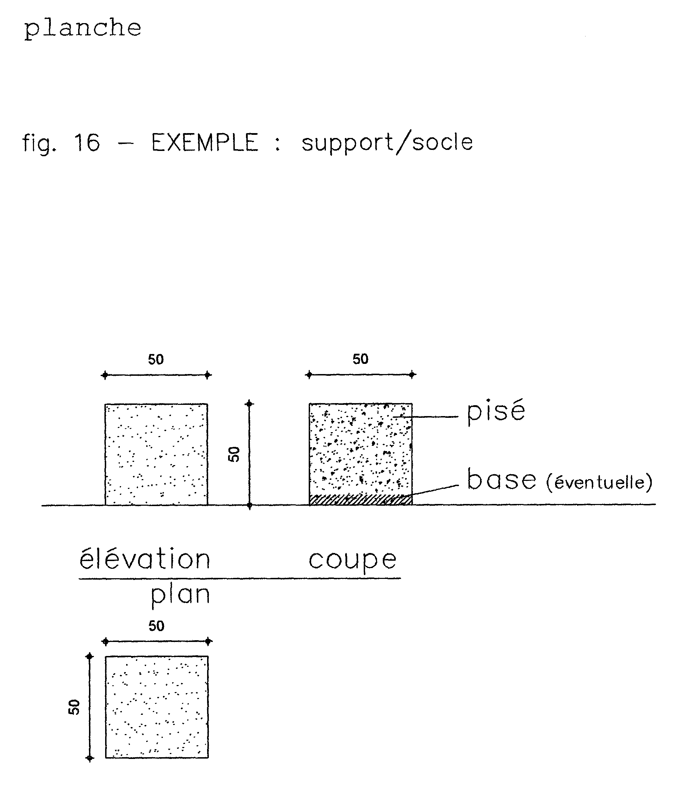

En vue de la manutention, de l'assemblage et du stockage éventuels de l'élément préfabriqué en pisé, une base peut être adaptée (fig. 16).

### - exposé détaillé de l'invention

### a - la conception de l'élément à préfabriquer

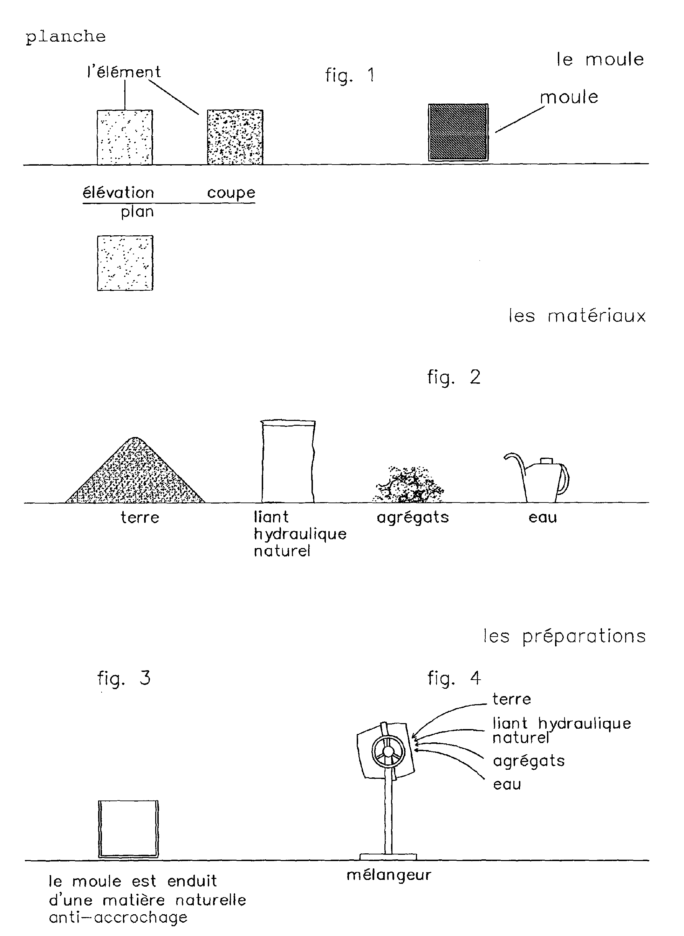

1 - l'élément (fig. 1)
   - la conception de l'élément et la réalisation de son moule sont fait en fonction de ses contraintes : structure, usage, aspect.
   - l'élément et son moule, sont conçus en fonction du lieu de fabrication : en usine (manutentionnable et stockable) et in situ.
2 - les matériaux (fig. 2)
   - une sélection définie et testée.
   - terre nécessitant une stabilisation modérée.
   - liant hydraulique naturel : chaux aérienne, chaux hydraulique, gypse, pouzzolane et/ou autres équivalents, choisi en fonction de la terre utilisée.
   - agrégats : gravier, briques pilées et/ou autres équivalents, viennent en complément du mélange terre/liant.
   - eau.

### b - les préparations

1 - préparation du moule (fig. 3)
   - nettoyer et enduire le moule d'une matière naturelle anti-accrochage : savon et/ou autres équivalents.
2 - préparation des matériaux
   - mélanger les différents matériaux, à dosages définis et testés en fonction de la composition de chacun (fig.4).
   - ajouter de l'eau, si il y a besoin, de façon à obtenir un mélange à peine humide et non pâteux.

### c - la mise en oeuvre du pisé

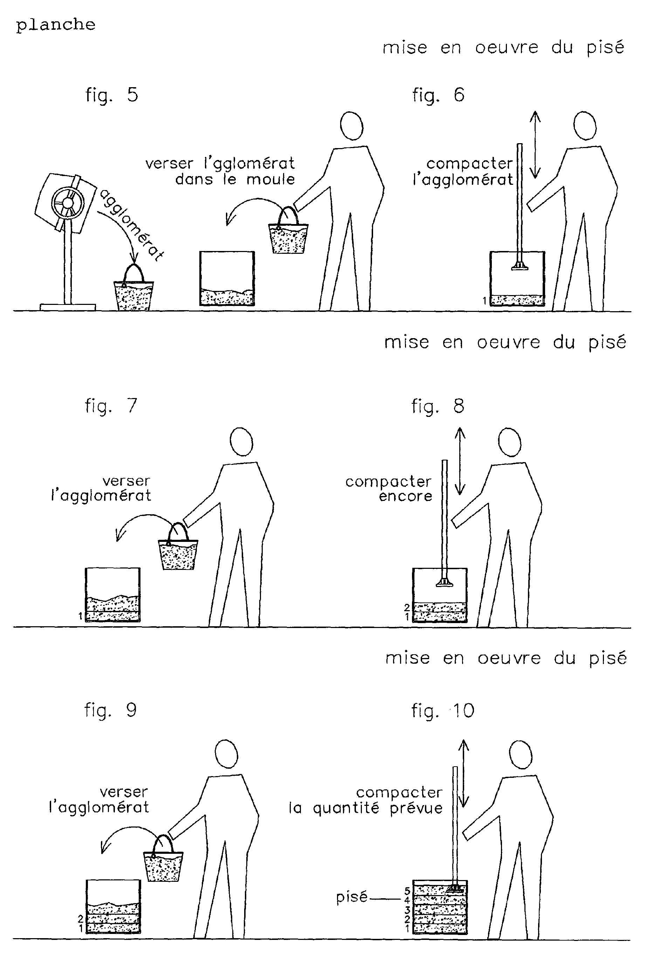

- verser l'agglomérat dans le moule, par couche de 5cm à 20cm d'épaisseur (fig. 5).
- compacter le pisé jusqu'à compacité recherchée (fig. 6).
- verser à nouveau des couches d'agglomérat et les compacter successivement (fig. 7 et 8).
- renouveler le versement et le compactage jusqu'à atteindre la quantité de pisé prévue (fig. 9 et 10).

### d - la mise en place de l'élément préfabriqué et sa finition

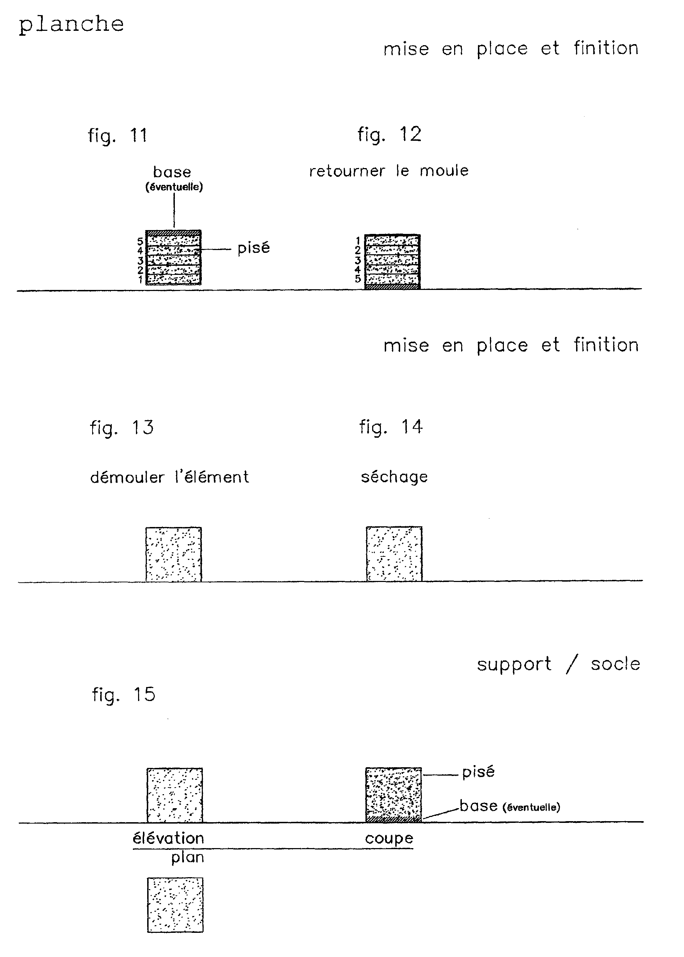

- en vue de la manutention et du stockage éventuels de l'élément préfabriqué en pisé, envisager une base (fig. 11 et 12). Celle-ci s'adapte à l'utilisation de moyens de manutentions usuels : chariot élévateur, grue, levier...
- démoulage (fig.13) et séchage (fig. 14) de l'élément en pisé (fig. 15).

### - application industrielle de l'invention

L'application industrielle de l'invention se répartit en deux phases principales :
- la conception et la réalisation de l'élément architectonique et de son moule, peuvent se faire artisanalement à la main, ou par CAO et DAO.
- la mise en oeuvre du pisé
   - les matériaux : le choix des composants peut être sujet à des tests mécaniques et chimiques, qui optimisent les spécificités du pisé.
   - le compactage du pisé peut se faire à la main. Pour des raisons d'homogénéité et de rentabilité, cette opération peut être réalisée par un compacteur mécanique.

## Revendications

1. Procédé de préfabrication d'éléments architectoniques en pisé **caractérisé en ce que** le pisé est mis en oeuvre dans un moule

2. Procédé selon la revendication 1 **caractérisé en ce que** le pisé est constitué de terre, de liant hydraulique naturel, d'agrégats et d'eaux, le dosage de chacun des composants s'adaptant à la nature de la terre.

3. Procédé selon les revendications 1 et 2 **caractérisé par** une mise en oeuvre spécifique du pisé qui consiste à verser l'agglomérat des matériaux (2) dans un moule et à le compacter par couches successives de 5 à 20cm d'épaisseur.

4. Procédé selon les revendications 1 et 3 **caractérisé en ce que**, en vue d'y mettre en oeuvre le pisé, le moule est nettoyé et enduit d'une matière anti-accrochage.

## Revendications modifiées

### Revendications modifiées conformément à la règle 86(2) CBE.

**1.** Procédé de préfabrication d'éléments architectoniques en pisé dans un moule, **caractérisé en ce qu'**il comprend les étapes consistant à :
a) disposer, couche par couche, dans ledit moule, un agglomérat de matériaux,
b) compacter dynamiquement ledit agglomérat de matériaux couche par couche dans ledit moule,
c) démouler l'élément en pisé ainsi obtenu, et à
d) laisser sécher cet élément.

**2.** Procédé selon la revendication 1, **caractérisé en ce qu'**on réalise ledit agglomérat avec de la terre, de l'eau, au moins un liant hydraulique et des agrégats.

**3.** Procédé selon la revendication 2, **caractérisé en ce qu'**on choisit ledit au moins un liant hydraulique dans le groupe comprenant la chaux aérienne, la chaux hydraulique, le gypse, la pouzzolane, un mélange de ces éléments.

**4.** Procédé selon l'une des revendications 2 ou 3, **caractérisé en ce qu'**on choisit lesdits agrégats dans le groupe comprenant du gravier, des briques pilées, un mélange de ces éléments.

**5.** Procédé selon l'une quelconque des revendications précédentes, **caractérisé en ce qu'**il comporte les étapes consistant à nettoyer ledit moule et à enduire ledit moule d'une matière naturelle anti-accrochage avant ladite étape a).

**6.** Procédé selon la revendication 5, **caractérisé en ce que** ladite matière naturelle anti-accrochage est du savon.

**7.** Procédé selon l'une quelconque des revendications précédentes, **caractérisé en ce qu'**il comprend l'étape consistant à adapter une base à l'élément en pisé à la fin de ladite étape b), en vue de la manutention et/ou du stockage de cet élément.

**8.** Procédé selon l'une quelconque des revendications précédentes, **caractérisé en ce que** lesdites couches font entre 5cm et 20cm d'épaisseur.

**9.** Procédé selon l'une quelconque des revendications précédentes, **caractérisé en ce que** l'on compacte ledit agglomérat de matériaux à la main.

**10.** Procédé selon l'une quelconque des revendications 1 à 8, **caractérisé en ce que** l'on compacte ledit agglomérat de matériaux au moyen d'un compacteur mécanique.

**11.** Elément en pisé réalisé selon un procédé conforme à l'une quelconque des revendications précédentes, **caractérisé en ce qu'**il comprend des couches successives d'un agglomérat de matériaux comprenant notamment de la terre, de l'eau, au moins un liant hydraulique et des agrégats, les couches successives d'agglomérat ayant été compactées successivement dans un moule.
